# EUROPEAN PATENT APPLICATION

(11) **EP 2 328 248 A2**
(43) Date of publication of application: **01.06.2011**
(21) Application number: 10192685.5
(22) Date of filing: 26.11.2010
(51) Int. Cl.: H02G 15/18

(54) **Support tube for cold-shrink sleeve for electrical cable joint**

(30) Priority: 27.11.2009 NO 20093436
(71) Applicant: Melbye Skandinavia AS, 2021 Skedsmokorset (NO)
(72) Inventor: Stokke, Steinar, 1929, Auli (NO); Aasheim, Christian, 1177, Oslo (NO)
(74) Representative: Acapo AS

(57) **Abstract**

The invention relates to a shrink-sleeve support tube (10), comprising an elongate tubular body supporting a cold-shrink sleeve (30) during a jointing phase, the support tube being configured be split into two separated tubes (12,14) along a split line (11) orientated in a plane more or less perpendicular to a longitudinal axis of the support tube (10), the adjacent ends of the two separated tubes (12,14) being provided with releasable locking means (15,16) to facilitate locking and splitting of the support tube (10).

Each of the two separated tubes (12,14) being configured to be split axially along at least two longitudinal split lines (18) into at least two separable units (12a,12b,14a,14b) and being provided with releasable retaining means (20,22) associated with the longitudinal split lines ((18).

The invention relates also a method for insulating a joint between two jointed electrical conductors (40) using cold shrinking where each of the separated tube shaped units (12,14), when free of the expandable phase insulation (30), is split longitudinally into at least along two separated units (12a,12b,14a,14b) along at least two longitudinally arranged split lines (18) by releasing retaining means (20,22) associated with the at least two longitudinal split lines (18), enabling removal of the at least two units (12a,12b,14a,14b) from the jointed cable (40) in a controlled manner.

## Description

### Technical Field of the Invention

The present invention relates to a shrink-sleeve support tube, comprising an elongate tubular body supporting a cold-shrink sleeve during a jointing phase. The support tube is configured to be split into two separated tubes along a split line orientated in a plane more or less perpendicular to a longitudinal axis of the support tube. The adjacent ends of the two separated tubes are provided with releasable locking means to facilitate locking and splitting of the support tube into two halves.

The present invention also relates to method for insulating a joint between two jointed electrical conductors using cold shrinking, comprising the following steps of assembling an expandable phase insulation on a support tube; threading the support tube with the expandable phase insulation on to a conductor end to be jointed with another conductor end; jointing the two ends to be jointed, and pulling the support tube with attached expandable phase insulation over the joint; splitting the support tube into two separate tube shaped units along a split line orientated in a plane perpendicular with respect to a longitudinal axis of the support tube, the splitting being achieved by means of a releasable locking means associated with the split line; and pulling the two tube shaped units in axially in opposite direction along the conductor allowing the expandable phase insulation to shrink radially inwards and onto the joint, covering intimately the joint.

In particular, the present invention relates to jointing heavy duty electrical cables for distribution of low voltage electricity in the order of 1 kV or less.

### Background of the Invention

Cold-shrinking of electrical cable joints is a known method for insulating a joint between two conductor ends, such as the end of two electrical cables. Such type of joints is particularly used for jointing medium voltage conductors. One advantage of this cold-shrinking technique is that it is not necessary to apply heat to crimp the phase insulation around the joint.

The prior art cold shrink jointing is based on jointing electrical phase conductors by applying an electrically conducting metal tube or sleeve around the ends to be jointed, establishing electrical contact between the ends to be jointed and the metal tube or sleeve. The joint is then insulated by means of a jacket or an insulating casing.

A prior art method for establishing phase insulation on a medium voltage joint is to thread a tube shaped sleeve supporting expanded phase insulation jacket onto one of the ends of the cables to be jointed. The ends of the cables are then electrically and mechanically interconnected, establishing proper electrical contact, for example by applying a prior art electrically conducting tube. The joint, including the electrically conductive tube are then covered by moving the supporting tube shaped sleeve with resilient enlargeable hollow body axially along the cable onto which it is threaded, until the joint is covered. In such position the supporting tube is removed axially along the jointed cable, enabling the expanded phase insulation jacket enabling to shrink over the established joint. The withdrawn supporting tube shaped sleeve is then removed from the cable using a tool for disintegration of the support sleeve. Such disintegration could be in the form of breaking or repeatedly chipping off elements or parts of the supporting sleeve until it is completely removed.

For low voltage three phase cold-shrink insulation, it has also been proposed to use a spiral as a carrier for the cold-shrink sleeve, the problem being that it is both time consuming and laborious to remove the spiral upon completed cold.-shrinking process. The spiral has a tendency to become stuck during retraction phase from the cold-shrink insulating sleeve. Further, as the spiral is winded around the cable, the spiral must also be cut into pieces in order to become loose off the cable.

For removal purpose, the material used for fabricating the support tube must be of a type allowing easily breaking or disintegration for removal subsequent to completed cold-shrink process.

EP 0 917 269 describes a hollow support sleeve body for supporting a resilient enlargeable hollow body of an electrical cable connection for medium voltage cables. A flat band or cord for assisting the sliding movement of the cable coupling relative to the support body has two sections respectively, extending along the outside and the inside of the support body and joined together adjacent a separation point for the support body. The support sleeve body is separable at a separation line extending along a circumference direction of the sleeve body, making it possible to split the sleeve body into two separate units during withdrawal of the shrinking process of the resilient enlargeable hollow body. Prior to and during the shrinking process the resilient enlargeable body is bridging the split zone between the two separate units, allowing the resilient enlargeable body to shrink over the cable joint.

US 2007/0029792 describes a support tube for a shrink sleeve for an electric cable joint for medium voltage cables, the tube serving to support a sleeve in an expanded state and then to be removed so as to allow the sleeve to shrink onto the joint. The support tube is provided with one single longitudinal split forming two longitudinal edges with mutual engagement means.

It is also known to make such support tubes by means of two half-tubes that are welded together by ultrasound welding over two zones in the proximity of the ends of the half tubes, the resulting support tube having four longitudinal weld zones extending along the two opposite generator lines, and also partly into the hollow tube, forming a possible obstacle for the conductors to be jointed.

It should be appreciated that such jointing often is performed in a excavated, narrow ditch also housing other types of cables and pipes, such as telecommunication cables, gas, steam, water and sewage pipes, and high or low voltage electricity supplying cables. It is therefore a need for a sleeve assembly and a jointing method for removal of the sleeve requiring as small place as possible and where the risks for causing damage to the neighboring pipes or cables are eliminated or at least to a substantial degree reduced.

Another need is to provide a sleeve assembly and a jointing and sleeve removal method which is not dependent on use of open flame or welding for providing a sound and proper joint.

Since the prior art methods of cold-shrinking has only be used successfully on medium voltage cables, it is also a need for a system enabling cold-shrinking for low voltage phase insulation, such as 1 kV or lower, as well as methods which are applicable in potentially hazardous environments, such as close to a hot gas pipe.

### Summary of the invention

An object of the present invention is to provide an improved and simplified joint, enabling removal of the supporting sleeve in an expedient and cost effective manner, requiring less space and less force for removal of the supporting sleeve upon completed jointing and cold-shrinking operation.

Another object of the invention is to provide a supporting sleeve and a cold-shrinking process allowing use of supporting sleeve made of a robust and strong material and configured in such way that the sleeve is not distorted, deformed or displaced during the jointing and cold-shrinking process, but may easily be removed subsequent to completed cold-shrinking without requiring use of heavy tools or detrimental disintegration or having to break the supporting sleeve into bits or pieces during removal.

Yet another object of the present invention is to provide a supporting sleeve and a jointing method performed in such way that the possibility of causing damage to the joint or the cable insulation, or cables or pipelines in the proximity of the joint, as consequence of the jointing or shrinking process, is eliminated or at least substantially reduced.

A still further object of the invention is to provide a supporting sleeve or tube and a method for jointing low voltage cable ends where the need for use of heavy duty service tool is reduced, if not eliminated.

A further object of the invention is to provide a support tube and a method for using such tube for jointing low voltage cables, i.e. cables designed for conduction electricity with a voltage up to 1 kV.

Another object of the invention is to provide a system and a method where the risks for causing damage to other types of ducts or cables in a ground, such as pipes for gas, water, sewage or cables for transmission of optical or electrical signals, are substantially reduced, if not eliminated.

Yet another object of the present invention is to provide a support tube which has a stable form both in lateral and longitudinal direction during the cold-shrink process.

Another object of the present invention is to configure the supporting tube of a material in such way that the tube is able to withstand the inherent radial pressure exerted by the expanded elastic insulation sleeve, since such sleeve must have so high inherent elasticity and shrinking force that the inwards radial crimping pressure will be large enough to enable crimping down to the diameter of the joint and still having an remaining or residual crimping effect to secure a tight sealing of the joint against intrusion of water or moist into the shrink-insulated phase joint.

The objects of the present invention is achieved by a support tube and a method as further defined by the characterizing part of the independent claims. Embodiments and alternatives to the subject matter disclosed in the independent claims are defined by the dependent claims.

According to the present invention, each of the two separated tubes is configured to be split axially along at least two longitudinal split lines into at least two separable units and further being provided with releasable retaining means associated with the longitudinal split lines.

At least one of the at least two split lines is preferably provided with at least quick release retaining means arranged on adjacent contact surfaces. Further, the releasable retaining means may according to one embodiment comprise outwards projecting pins and corresponding holes.

The outwards projecting pins may for example be arranged on one of the contact surfaces, forming a split, while the holes are correspondingly arranged on the adjacent contact surface of the split.

According to an alternative embodiment of the invention, the releasable retaining means may be in the form of longitudinally arranged groove and tongue means arranged on two adjacent contact surfaces.

Further, and in addition, each of the separated tube may at adjacent end surfaces be provided with at least quick release locking device, configured to interlocking the two separable tubes during the creep shrinking phase. Preferably, but not necessary, the quick release locking device on the end surfaces of the two separable tubes may comprise a latch or catch mechanism or a threaded connection. Such the latch or catch mechanism may for example be configured with a male and a female part arranged at the region of the adjoining end part of each tube. Alternatively, the quick release lock is in the form of male and female end with externally and internally arranged threads, respectively.

According to the method for insulating a joint between two jointed electrical conductors using cold shrinking according to the invention, each of the separated tube shaped units, when free of the expandable phase insulation, is split longitudinally into at least two separated units along at least two longitudinally arranged split lines by releasing the retaining means associated with the at least two longitudinal split lines, enabling removal of the at least two units from the jointed cable in a controlled and effective manner.

A major advantage of the support tube assembly according to the present invention resides in that the support tube assembly used for cold-crimp insulating a joint of a phase conductor may be split and removed without having to depend on use of purpose built tool or any tool at all, the removal being achieved without having to apply large and uncontrolled forces. This feature reduces the risks of damaging the phase conductors, itsi insulation or any other duct or cable being laid in parallel with the conductor in question.

Further, the method of mounting the cold-shrink sleeve and the removal of its support tube subsequent to completed mounting, is both simple and cost effective. Due to the configuration of the support tube, the space required for successfully completng the mounting of the cold-shrink insulation is reduced compared with the prior art systems used. Further, the method and the support tube assembly is particularly designed for enabling jointing of water exposed heavy duty cables.

The material used for the support tube may for example, but not limited to a plastic polymer, in particular of the type HDPE, while the expandable phase insulation may be made from a rubber type material such as EPDM. It should be appreciated that according to the present invention it is possible to make the various units of the support tube from a stable and strong material, being able to withstand large externally applied pressure loads without collapsing or becoming deformed or distorted. Further, due to the same reason the possibility of collapsing is substantially reduced, if not avoided.

If deemed required, the support tube components may be re-used. A gliding film or substance may preferably be applied between the expandable insulation and the support tube in order to enhance removal of the support tube during the cold-shrinking process.

### Short Description of the Drawings

One embodiment of the invention will now be described in detail below, referring to the accompanying drawings, where:
Figure 1 shows schematically in perspective a support tube according to the invention, made up of two assembled, interconnected, tubular pipe elements each pipe element consisting of two separable and interlocked halves;
Figure 2, shows schematically a side view of the support tube assembly shown in Figure 1;
Figure 3 shows schematically in perspective the supporting tube assembly shown in Figure 1 and 2 in an exploded view;
Figure 4 shows schematically in perspective a supporting tube assembly with an expandable phase insulation sleeve mounted on the supporting tube assembly, surrounding the latter;
Figure 5 shows schematically in perspective a cable consisting of three separate conductors in jointed state, but prior to start of the shrink-sleeve insulating process;
Figure 6 shows schematically in perspective the cable shown in Figure 5, where the shrink-sleeve process has started for one of the three conductors, the other two is shown at a stage prior to starting the shrink-sleeve process;
Figure 7 shows schematically a side view of the joint, showing the two halves in dismantled position; and
Figure 8 shows schematically and in perspective the supporting tube in dismantled view together with a jointing element, designed to secure an electrical joint between two conductor ends.

### Detailed Description of the Invention

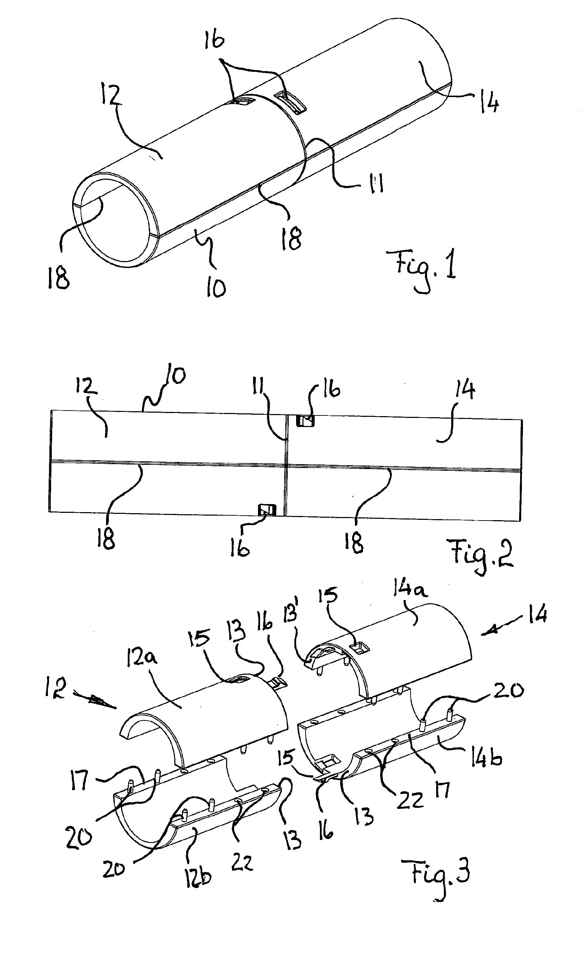

Figure 1 shows schematically in perspective a support tube or sleeve 10 according to the invention, while Figure 2, shows schematically a side view of the support tube assembly shown in Figure 1 and Figure 3 shows schematically in perspective the supporting tube assembly shown in Figure 1 and 2 in an exploded view.

As indicated inn the Figure, the support tube 10 may be split into two tubular pipe elements 12,14 along a split line 11, lying in a plane being perpendicular to the longitudinal axis of the support tube 10. As indicated in Figure 1, the two halves have, apart from a locking and releasing mechanism 16, the same shape and dimensions. It should be appreciated, however that the shape and dimensions of one half may differ from the other, without thereby deviating from the inventive idea.

As further indicated in Figure 1 and in particular in Figure 3, the two halves 12,14 may be assembled and interlocked by means of a latch mechanism 16, for example in the form of two small tongues 16 projecting diametrically out from one end surface 13 of one of the tubular pipe elements 12 and two corresponding holes or recesses 15 on one end of the other tubular element 14, arranged diametrically in the vicinity of an end surface 13' on the other tubular pipe element 14. The holes 15 and the outwards projecting tongues 16 are configured to function and as a combined locking and release mechanism.

As shown in the Figures 1-3, each of pipe elements 12,14 consists further of two separable and interlocked halves 12a,12b,14a,14b. As indicated in Figure 1, the split lines in the two pipe elements 12,14 extend in longitudinal direction of the pipe elements 12,14, diametrically arranged with respect to each other. Each half (12a,12b,14a,14b) is thus provided with a contact surface 17 extending along the spilt line 18 on each side. The contact surfaces 17 are provided with locking and release devices. According to the embodiment shown such locking and release devise may be pins 20 extending perpendicularly up from the contact surfaces 17 and corresponding holes 22 for receiving the pins 20 on an adjacent contact surface 17. The purpose of the pins 20 and the corresponding holes 22 is to prevent the assembled unit to split unintentionally in the phase where the support tube 10 carries an elastic and expandable cold-shrink sleeve 30 or during retraction of the support tube 10 during the cold-shrink procedure. The number and dimensions of the pins 20 and the holes 22 may vary dependent upon the forces applied.

In stead of a locking and release device in the form of pins 20 and corresponding holes 22, other solutions may also be feasible, such as for example longitudinally arranged groove and tongue means arranged on two adjacent contact surfaces 18.

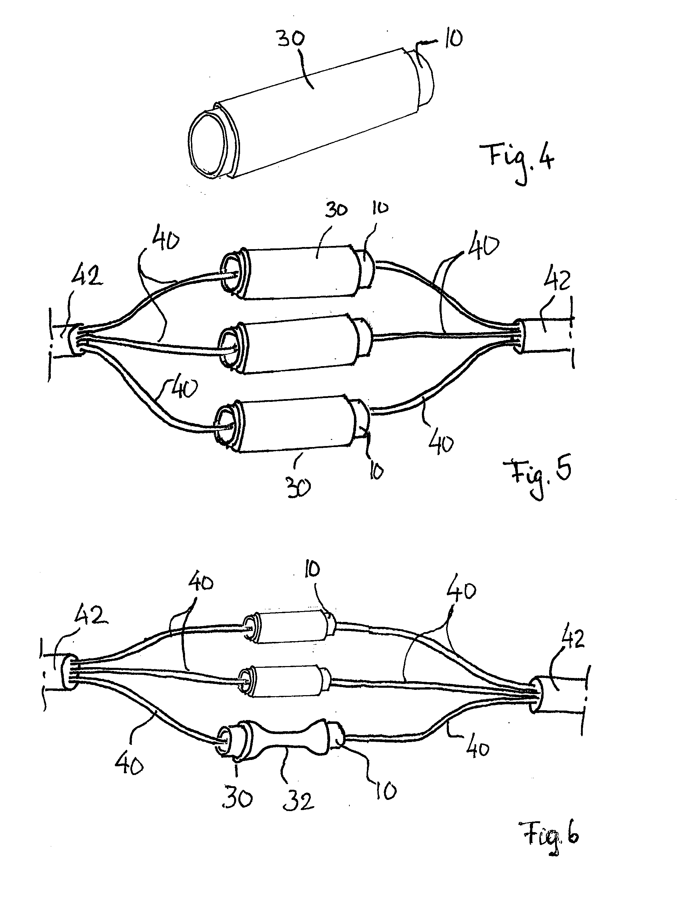

Figure 4 shows schematically in perspective a supporting tube assembly 10 with an expandable phase insulation sleeve 30 mounted on the supporting tube assembly 10, surrounding the latter. As indicated in Figure 4, the length of the support tube 10 in assembled condition is longer than the expandable, elastic phase insulation sleeve 30, allowing an operator or a tool to grip around the support tube 10 in order to split the support tube 10 into the two tube elements 12,14 and thereupon to move each half tube 12,14 axially away from the joint, allowing the expandable elastic phase insulation sleeve 30 to creep intimately around the joint to form a proper and watertight insulation.

Figure 5 shows schematically in perspective two cables 42, each consisting of three separate conductors 40 in jointed state, but prior to start of the shrink-sleeve insulating process, while Figure 6 shows schematically in perspective the cables shown in Figure 5, where the shrink-sleeve process, denoted with the reference number 32, has started for one of the three conductors 40, the other two conductors 40 being shown at a stage prior to starting the shrink-sleeve process.

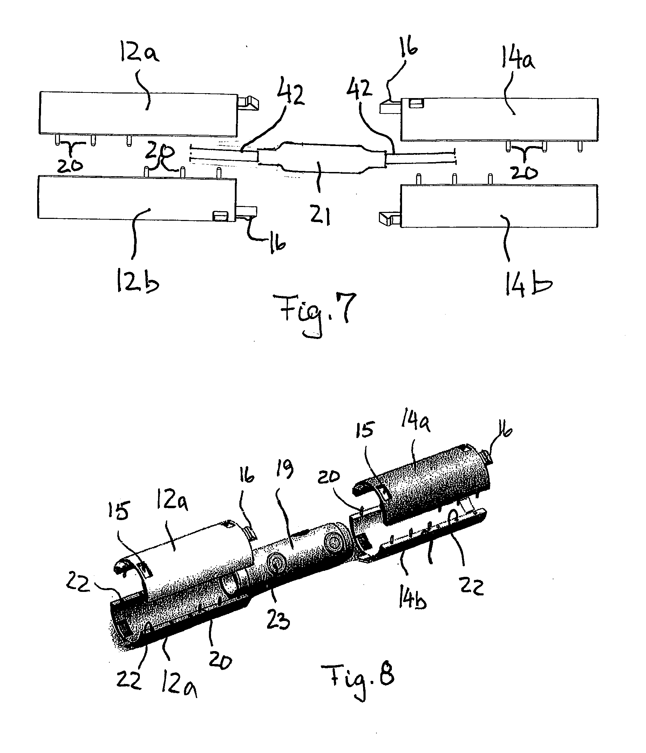

Figure 7 shows schematically a side view of the joint, showing the two halves 12a.12b,14a,14b in dismantled position. Further the Figure also indicate the outwards projecting locking and release devices 16, and possible pin 20 arrangement. It should be appreciated that the latch system may consist of several projecting tongue 16 and the corresponding holes 15 on each surface to secure a stable connection between two halves 12,14.. Further, Figure 7 also shows the two cables 40 in a jointed condition 21, covered with cold-shrink, elastic and expandable insulation sleeve 30.

Figure 8 shows schematically and in perspective the supporting tube 10 in dismantled view together with a jointing tubular element or connector 19, designed to house the two ends of the cables 40 to be jointed and to secure an electrical joint 21 between two conductor 19 ends. For such purpose, the connector 19 is provided with two plugs or screws 23 for locking the cable 40 ends to the connector 19.

It should be appreciated that the length and diameter of the support tube must be so as to enable the cold-shrink, elastic, expandable sleeve to cover the joint and the adjoining part of the insulated cables, and that the diameter is such that the cable and connector 19 easily may pass through the support tube. Further, the diameter of the support tube10 must be so as to provide the required inwards lateral force to produce the required shrinking force.

## Claims

1. A shrink-sleeve support tube (10), comprising an elongate tubular body supporting a cold-shrink sleeve (30) during a jointing phase, the support tube being configured be split into two separated tubes (12,14) along a split line (11) orientated in a plane more or less perpendicular to a longitudinal axis of the support tube (10), the adjacent ends of the two separated tubes (12,14) being provided with releasable locking means (15,16) to facilitate locking and splitting of the support tube (10), **characterized in that** each of the two separated tubes (12,14) being configured to be split axially along at least two longitudinal split lines (18) into at least two separable units (12a,12b,14a,14b) and being provided with releasable retaining means (20,22) associated with the longitudinal split lines ((18).

2. Support tube (10) according to claim 1, wherein at least one of the at least two split lines (18) is provided with at least quick release retaining means (20,22) arranged on adjacent contact surfaces (17).

3. Support tube (10) according to claim 1 or 2, wherein the releasable retaining means (20,22) comprises outwards projecting pins (20) and corresponding holes (22).

4. Support tube according to claim 3, wherein the outwards projecting pins (20) are arranged on one of the contact surfaces (17) forming the split, while the holes (22) are correspondingly arranged on the adjacent contact surface (17) of the split (18).

5. Support tube (10) according to claim 2, wherein the releasable retaining means is in the form of longitudinally arranged groove and tongue means arranged on two adjacent contact surfaces(171).

6. Support tube (10) according to one of the claims 1-5, wherein each separated tube (12,14) at adjacent end surfaces (23) is provided with at least quick release locking device (16, 17), configured to interlocking the two separable tubes (12,14) during the creep shrinking phase.

7. Support tube (10) according to claim 6, wherein the quick release locking device (12,14) on the end surfaces of the two separable tubes (12,14) comprises a latch or catch mechanism or a threaded connection.

8. Support tube (10) according to claim 7, wherein the latch or catch mechanism is configured with a male and a female part arranged at the region of the adjoining end part of each tube.

9. Support tube according to one of the claims 1-6, wherein the quick release lock is in the form of male and female end with externally and internally arranged threads, respectively.

10. Method for insulating a joint between two jointed electrical conductors (40) using cold shrinking, comprising the following steps:
- assembling an expandable phase insulation (30) on a support tube (10),
- threading the support tube (10) with the expandable phase insulation (30) on to a conductor (40) end to be jointed with another conductor (40) end,
- jointing the two ends to be jointed, and pulling the support tube (10) with attached expandable phase insulation (30) over the joint,
- splitting the support tube (10) into two separate tube shaped units (12,14) along a split line ((11) orientated in a plane perpendicular to a longitudinal axis of the support tube (10), the splitting being achieved by means of a releasable locking means (15,16) associated with the split line (11), and
- pulling the two tube shaped units (12,14) in axially opposite direction along the conductor (40) allowing the expandable phase insulation (30) to shrink radially inwards and onto the joint (32), covering intimately the joint (32), **characterized in that** each of the separated tube shaped units (12,14), when free of the expandable phase insulation (30), is split longitudinally into at least along two separated units (12a, 12b, 14a, 14b) along at least two longitudinally arranged split lines (18) by releasing retaining means (20,22) associated with the at least two longitudinal split lines (18), enabling removal of the at least two units (12a, 12b, 14a, 14b) from the jointed cable (40) in a controlled manner.

11. Method according to claim 10, wherein the method is used for providing cold-shrink insulation on low voltage cable joints.

12. Use of a support tube according to one of the claims 1-9 for providing cold-shrink insulation of low voltage cable joints.
